# EUROPEAN PATENT SPECIFICATION

(11) **EP 4 419 779 B1**
(45) Date of publication and mention of the grant of the patent: **26.08.2026**
(21) Application number: 22798381.4
(22) Date of filing: 20.10.2022
(51) Int. Cl.: F01K 25/10, H02J 15/00

(54) **CRYOGENIC ENERGY STORAGE SYSTEMS AND METHODS OF OPERATING THE SAME**
KRYOGENE ENERGIESPEICHERSYSTEME UND VERFAHREN ZUM BETRIEB DAVON
SYSTÈMES DE STOCKAGE D'ÉNERGIE CRYOGÉNIQUE ET LEURS PROCÉDÉS D'ACTIONNEMENT

(30) Priority: 20.10.2021 NL 2029478
(43) Date of publication of application: 28.08.2024
(73) Proprietor: University of KwaZulu-Natal, 3629 KwaZulu-Natal (ZA)
(72) Inventor: JARVIS, Alan Lawrence Leigh, 3629 KwaZulu-Natal (ZA)
(74) Representative: Boult Wade Tennant LLP
(86) International application number: PCT/IB2022/060104
(87) International publication number: WO 2023/067549

(56) References cited:
- GB-A- 2 501 683
- US-A1- 2012 289 407
- US-A1- 2014 217 739
- US-A1- 2016 365 182
- US-A1- 2020 400 372

## Description

### FIELD OF INVENTION

THIS INVENTION relates to Cryogenic Energy Storage Systems (CESS), including Liquid Air Energy Storage (LAES), Liquid Air Battery (LAB), and the like.

### BACKGROUND OF INVENTION

Cryogenic Energy Storage Systems (singular, CESS), for example, as described in US 2014/0217739 A1 and GB 2501683 A, are energy storage systems which store energy in the form of cryogenic liquids, referred to herein also as "cryogens", at low temperatures for subsequent expansion, as and when required, to drive suitable turbine/s to produce electrical energy. CESSs are scalable and can store large amounts of energy (> 250 MW.h) in an environmentally friendly manner since cryogenic liquid in the form of liquid air is usually benign, portable, and nonpolluting. In this way, CESSs provides an environmentally friendlier option to store energy and generate electrical energy when required as opposed to fossil fuel combusting technologies such as petroleum or diesel generators.

There are typically three stages or parts to a CESS, (i) liquefaction of gaseous cryogen such as air with use of electrical energy, (ii) storage of liquid air in tanks and (iii) the expansion of liquid air which drives turbines to generate electrical energy as shown below:

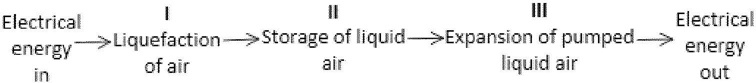

In summary, a CESS uses electricity (may be renewable based) to cool a cryogen gas such as air until it liquefies. This liquid air is stored in an appropriate tank. The liquid cryogen turns into a kinetic gaseous state when exposed to ambient air or with waste heat, the energised gas turns a turbine and generates electricity.

Other technologies which require low temperatures to operate such as superconducting magnetic energy storage devices, such as those described in US 2016/0365182 A1 make use of magnetic fields to store energy. In particular, these technologies comprise coils which are cooled below superconducting temperatures and the magnetic field is created by the flow of direct current in the superconducting coil.

The Inventor has identified that CESSs, as well as other technologies which require low temperatures to operate or efficiently function (in the range which cryogen in the form of liquid air is in a liquid state) have different energy generation and/or fluctuation profiles may be optimised or enhanced by incorporating said technologies with CESSs, particularly parts thereof, in a mutually beneficial or synergistic fashion, for example, which provides energy in at least a more controlled and stable fashion.

### SUMMARY OF THE INVENTION

According to a first aspect of the invention, there is provided a cryogenic energy storage system according to claim 1.

The cryogen stored in the cryogen storage facility may be liquid air or nitrogen. Liquid air is mostly comprised of liquid nitrogen (78%). In this regard, the cryogen storage facility may maintain the cryogen therein at a temperature of approximately 78.8 K, between the boiling point of liquid nitrogen (77.36 K) and liquid oxygen (90.19 K), and at one atmospheric pressure. It will be understood that the temperature of the cryogen may be maintained at a temperature not greater than the boiling point of the cryogen (approximately 78.8 K in the case of the cryogen being in the form of liquid air), and greater than the freezing point of the cryogen (58.0 K in the case of the cryogen being in the form of liquid air or 63.1 K in the case of liquid nitrogen).

The superconducting device may be a high temperature superconducting device and/or may comprise or may be constructed from superconducting material. In this regard, the superconducting system/device is configured to operate at higher cryogenic temperatures of around 78 K (-197 °C) which may be the approximate temperature at which the cryogen in the cryogen storage facility is stored at. It follows that the temperature of the cryogen in the cryogen storage facility is conveniently below a critical temperature (Tc) of superconducting/superconductor material present in the superconducting device or from which the superconducting/superconductor device is composed of. In this way, the need for, and costs associated with, a dedicated superconductor device cooling system is conveniently obviated as the presence of the superconducting device in the cryogen storage facility will generate little excess cryogen boil-off and appear thermally transparent to the cryogen tank since most superconducting devices generate little or no heat due to the superconducting property of zero resistance.

The superconducting device may be selected from a group comprising a superconducting magnet energy storage (SMES) device, a superconducting transformer (ST), and a superconducting fault current limiter (SFCL). It will be noted that in some example embodiments, the superconducting system may comprise more than one superconducting device, for example, selected from the above group of superconducting devices.

The superconducting device may be maintained at an operational temperature below Tc by the cryogen storage facility which reduces costs and complexity of providing dedicated cooling systems therefor.

The SMES device may be configured to generate electrical energy instead of, or in addition to, the electrical energy generated by the energy generating arrangement. In particular, the SMES device may be configured to provide power to a load operatively connected to the cryogenic energy storage system prior to the energy generating arrangement providing power to said load. This serves to address uses such as load levelling and balance short duration transient faults due to its high power response as described herein. In some example embodiments, the electrical energy generated by the energy generating arrangement may be used to charge the SMES device.

The SFCL may be electrically coupled to an electrical power grid and to a load, wherein the SFCL may be configured to limit fault currents from the grid reaching the load. Similarly, the ST may be electrically coupled to an electrical power grid and/or a load.

The cryogenic energy storage system may comprise:
a memory device;
a processor coupled to the memory device; and
one or more sensors operatively arranged in the cryogen storage tank operatively connected to the processor to measure one or more parameters and transmit data indicative of the same to the processor, wherein the processor is configured to activate a suitable alarm protocol in response to determining that one or more measured parameters is unacceptable.

In particular, the system may comprise a suitable level sensor communicatively coupled to the processor to measure an amount of cryogen stored in the cryogen storage tank, wherein the processor is configured to activate a suitable alarm protocol in response to determining that the amount of cryogen in the cryogen storage tank, measured by way of the level sensor, falls below a minimum operating amount/level/volume of cryogen required for the superconducting device. In this way, the cryogen in the cryogen storage tank may be used to generate electrical energy by way of the energy generating arrangement but not to an amount or extent which will affect cooling of the superconducting device as described herein. It follows that the minimum operating amount/level/value of cryogen required for the superconducting device is an amount of cryogen required to suitably cool the superconductor device such that it is maintained and/or operating in a superconducting state.

The system may comprise a suitable vibration sensor communicatively coupled to the processor to sense vibration of, or in, the cryogen storage tank, wherein the processor is configured to activate a suitable alarm protocol in response to determining that the vibration sensed, by way of the vibration sensor, is not acceptable. The vibration sensor may be a conventional piezoelectric senor vibration sensor. The superconducting devices may be triggered into a quench event based on vibrations exceeding a threshold.

The system may comprise a suitable pressure sensor communicatively coupled to the processor to measure the pressure in the cryogen storage tank, wherein the processor is configured to activate a suitable alarm protocol in response to determining that the pressure in the cryogen storage tank, measured by way of the pressure sensor, is not acceptable. The cryogen storage tank may comprise a suitable valve for boil off of cryogen. The cryogen storage tank may further comprise a second valve to cope with generation of excess vapour in case of an over pressure event, such as a quench, detected by the processor. The processor may be configured to control the valves. In the event of the processor determining that the measured pressure exceeds a maximum pressure, the processor may be configured to activate the alarm protocol by at least disconnecting/purging energy to/from the superconducting device.

The system may comprise a temperature sensor communicatively coupled to the processor to measure temperature of the cryogen stored in the cryogen storage tank, wherein the processor is configured to activate a suitable alarm protocol in response to determining that the temperature of the cryogen in the cryogen storage tank, measured by way of the temperature sensor, falls outside of a predetermined temperature range. The system may comprise a plurality of temperature sensors to sense/measure the temperature of the cryogen stored and/or the cryogen storage tank, particularly the homogeneity of the temperature of the cryogen. As alluded to herein, in the case of the cryogen being liquid air, the predetermined temperature range is above the freezing point of liquid air, for example, 58.0 K but less than the boiling point of liquid air, for example, 78.8 K. It will be noted that the alarm protocol, should the measured temperature not be within the predetermined temperature range, may comprise disconnecting/purging energy to/from the superconducting device, if necessary, in order to negate a critical superconductor quench event.

In summary, part of the alarm protocol as contemplated herein may comprise one or more of disconnecting/purging energy to/from the superconducting device, and generating a suitable alarm signal to actuate a suitable alarm device. The suitable alarm device may be a siren, light, or the like to alert operators of the system and/or maintenance personnel.

In one example embodiment, the system may comprise a suitable vacuum pump operatively connected to the cryogen storage tank, wherein the suitable alarm protocol comprises operating the vacuum pump to reduce vapour pressure in the cryogen storage tank, thereby reducing the temperature of the cryogen in the cryogen storage tank to bring the temperature within the predetermined temperature range. This may be done in response to the temperature measured by way of the temperature sensor/s falling outside, typically above the range contemplated herein for the cryogen in the cryogen storage tank.

To ensure a homogenous temperature of the cryogen in the cryogen storage tank, the cryogen storage tank may comprise a suitable agitator, such as a stirrer, located therein so as to at least to maintain a homogenous temperature in the cryogen storage tank. It will be understood that the processor may be configured to operate the stirrer in response to determining that the temperature distribution of cryogen in the cryogen storage tank is not homogenous. Instead, or in addition, the processor may be configured to operate the stirred periodically, for example, at predetermined time intervals to ensure homogeneity of temperature of the cryogen in the cryogen storage tank.

According to the invention, the cryogen storage facility comprises one or more primary cryogen storage tank/s configured for storing or storing the cryogen; and at least one secondary cryogen storage tank storing or configured for storing the cryogen and housing the superconducting device. It follows that the secondary cryogen storage tank is the cryogen storage tank storing or configured for storing the superconducting device as hereinbefore described, wherein the primary storage tank/s may store cryogen for use by the energy generating arrangement to generate electrical energy and optionally to top up the secondary cryogen storage tank with cryogen. The primary and secondary cryogen storage tanks are in controlled fluid communication with each other.

It will be noted that in the last mentioned example embodiment, the primary cryogen storage tank typically supplies the cryogen to the cryogen expansion arrangement. The secondary cryogen storage tank is configured to house the superconducting system. For brevity, the terms "primary tank" and "primary cryogen storage tank" may be used interchangeably herein. Similarly, the terms "secondary tank" and "secondary cryogen storage tank" may be used interchangeably herein.

The one or more primary cryogen storage tanks described herein may be thermally insulated cryogen storage tanks.

The secondary storage tank may receive cryogen from the primary storage tank and may be configured to maintain cryogen therein at a lower temperature than the primary storage tank. To this end, the system comprises a suitable pump to transport cryogen between the primary cryogen storage tank and the second cryogen storage tank. The pump may be operatively located in or adjacent to the primary cryogen storage tank to pump cryogen from the primary cryogen storage tank to the secondary cryogen storage tank so as to maintain a predetermined minimum operating amount/level/volume of cryogen in the secondary cryogen storage tank.

The system as described herein may comprise a suitable processor communicatively coupled to the pump to control the same to pump cryogen from the primary cryogen storage tank to the secondary cryogen storage tank upon detecting that the cryogen levels in the secondary cryogen storage tank is below the predetermined minimum operating amount/level. To this end, the secondary cryogen storage tank may comprise a suitable level sensor to sense the level or volume of cryogen in the secondary cryogen storage tank.

The system may comprise a suitable temperature reducing assembly configured to reduce the temperature of the cryogen in the secondary cryogen storage tank. In one example embodiment, the temperature reducing assembly may comprise preferably a vacuum pump configured to reduce vapour pressure in the secondary cryogen storage tank, wherein operation of the vacuum pump causes a reduction of the temperature of the cryogen in the secondary cryogen storage tank.

In one example embodiment, the secondary tank may comprise a suitable temperature sensor operatively coupled to the processor and configured to sense the temperature of the cryogen in the secondary tank, wherein the processor is configured to operate the vacuum pump in response to determining, via the temperature sensor, that the temperature of the cryogen in the secondary cryogen storage tank is not within a desired temperature range or above a predetermined temperature threshold.

The secondary cryogen storage tank may be pneumatically isolated from the primary cryogen storage tank when the vacuum pump is operated. This is achieved by way of suitable valve/s provided in a fluid flow path provided between the primary cryogen storage tank and the secondary cryogen storage tank.

In one example embodiment, the primary cryogen storage tank may be one of a plurality of primary cryogen storage tanks. Similarly, the secondary cryogen storage tank may be one of a plurality of secondary cryogen storage tanks. In one example embodiment, the primary storage tank may have a capacity of approximately 2000 litres of cryogen. One or both the primary and the secondary cryogen storage tanks may be constructed wholly, or in part, from a non-metallic material so as at least to reduce any induction heating of the vessel.

The cryogen expansion arrangement may comprise a suitable heat exchanger. The heat exchanger may be configured to heat the cryogen using heat from one or more of ambient air, geothermal heat, waste heat from a power plant, and waste heat from a manufacturing plant in order to expand the same.

The energy generating arrangement may comprise:
a turbine configured to be driven by the expanding cryogen from the cryogen expansion arrangement, in use; and
a generator configured to be actuated by the turbine thereby to generate electrical energy, in use.

In one example embodiment, the system may comprise an air liquification arrangement configured to liquify air and store the same in the cryogen storage facility. In one example embodiment, the air liquification arrangement may be configured to supply liquified air for storage in the primary cryogen storage tank.

According to a second aspect of the invention, there is provided a method of operating a cryogenic energy storage according to claim 9.

The cryogenic energy storage system may be similar to the system as described herein thus descriptions relating thereto apply *mutatis mutandis* to the summary of any of the methodologies for operating such cryogenic energy storage system described herein.

The method may comprise operating the SMES to generate electrical energy instead or in addition to the electrical energy generated by the energy generating arrangement. The method further comprises charging the SMES device with electrical energy generated by the energy generating arrangement, in use.

The method may comprise operating the SMES device to provide power to a load operatively connected to the cryogenic energy storage system prior to the energy generating arrangement providing power to said load.

The method may comprise:
measuring one or more parameters associated with the cryogen storage tank and/or the cryogen stored therein;
transmitting the measured parameters to a suitable processor communicatively coupled to a suitable memory device; and
activating a suitable alarm protocol in response to determining that one or more measured parameters is unacceptable.

The method may comprise measuring an amount of cryogen stored in the cryogen storage tank, and activating a suitable alarm protocol, by way of the processor, in response to determining that the amount of cryogen in the cryogen storage tank falls below a minimum operating amount of cryogen required for the superconducting device stored therein.

The method may comprise sensing or measuring vibration of, or in, the cryogen storage tank, and activating a suitable alarm protocol, by way of the processor, in response to determining that the vibration sensed is not acceptable.

The method may comprise measuring pressure in the cryogen storage tank and activating a suitable alarm protocol, by way of the processor, in response to determining that the pressure measured is not acceptable.

The method may comprise measuring temperature of the cryogen stored in the cryogen storage tank and activating a suitable alarm protocol, by way of the processor, in response to determining that the temperature of the cryogen in the cryogen storage tank falls outside of a predetermined temperature range.

The suitable alarm protocol may comprise operating a vacuum pump operatively connected to the cryogen storage tank to reduce vapour pressure in the cryogen storage tank, thereby reducing the temperature of the cryogen in the cryogen storage tank to bring the temperature within the predetermined temperature range.

The predetermined temperature range may be bound by a temperature not greater than the boiling point of the cryogen, and greater than the freezing point of the cryogen.

The method may comprise operating a suitable agitator in the cryogen storage tank so as to at least to maintain a homogenous temperature in the cryogen storage tank.

The cryogen storage facility comprises:
one or more primary cryogen storage tank/s storing or configured to store the cryogen; and
at least one secondary cryogen storage tank storing or configured to store the cryogen, wherein the primary and secondary cryogen storage tanks are in controlled fluid communication with each other, and wherein the secondary cryogen storage tank houses the superconducting device, wherein the method comprises transporting cryogen from the primary cryogen storage tank to the secondary cryogen storage tank in response to detecting that a level of cryogen in the secondary cryogen storage tank is below a predetermined threshold and/or transporting cryogen from the secondary cryogen tank to the primary cryogen tank up to a minimum volume of cryogen required in the secondary tank required for the superconducting device.

The method may comprise reducing vapour pressure in the secondary cryogenic storage tank by operating a suitable vacuum pump operatively connected to the secondary tank as described herein.

The method may comprise maintaining the temperature of the cryogen in the primary cryogen storage tank less than or equal to the boiling point of the cryogen. The method may comprise maintaining the temperature of the cryogen in the secondary cryogen storage in a temperature range less than the boiling point of the cryogen and greater than the freezing point of the cryogen.

Also disclosed herein is a cryogen storage facility storing or configured to store a cryogen, wherein the cryogen storage facility comprises a superconducting device therein such that the superconducting device is cooled by the cryogen stored in the cryogen storage facility.

The cryogen storage facility may be substantially similar to the cryogen storage facility described herein.

Also disclosed herein is a method of cooling a superconducting device, wherein the method comprises:
locating the superconducting device in a cryogen storage facility associated with a cryogen energy storage system; and
cooling the superconducting device with the cryogen stored in the cryogen storage facility.

It will be appreciated by those skilled in the art that the description provided herein relating to one aspect of the invention may extend/apply, *mutatis mutandis,* to other aspects of the invention described herein.

### BRIEF DESCRIPTION OF THE DRAWINGS

- **Figure 1**: shows a high-level schematic block diagram of a Cryogenic Energy Storage System in accordance with an example embodiment of the invention;
- **Figure 2**: shows a schematic diagram of a cryogen storage facility comprising a cryogen storage tank with a superconducting device embedded therein in accordance with an example embodiment of the invention; and
- **Figure 3**: shows a schematic diagram of another example of a cryogen storage facility comprising a primary cryogen storage tank and a secondary cryogen storage tank with a superconducting device embedded therein in accordance with an example embodiment of the invention.

### DESCRIPTION OF PREFERRED EMBODIMENTS

The following description of the invention is provided as an enabling teaching of the invention. Those skilled in the relevant art will recognise that many changes can be made to the embodiments described, while still attaining the beneficial results of the present invention. It will also be apparent that some of the desired benefits of the present invention can be attained by selecting some of the features of the present invention without utilising other features.

The following description is provided as illustrative of the principles of the present invention and not a limitation thereof.

It will be appreciated that the phrase "for example," "such as", and variants thereof describe non-limiting embodiments of the presently disclosed subject matter. Reference in the specification to "one example embodiment", "another example embodiment", "some example embodiment", or variants thereof means that a particular feature, structure or characteristic described in connection with the embodiment(s) is included in at least one embodiment of the presently disclosed subject matter. Thus, the use of the phrase "one example embodiment", "another example embodiment", "some example embodiment", or variants thereof does not necessarily refer to the same embodiment(s).

Unless otherwise stated, some features of the subject matter described herein, which are, described in the context of separate embodiments for purposes of clarity, may also be provided in combination in a single embodiment. Similarly, various features of the subject matter disclosed herein which are described in the context of a single embodiment may also be provided separately or in any suitable subcombination.

The headings used herein are for organizational purposes only and are not meant to be used to limit the scope of the description or the claims. For brevity, the word "may" is used in a permissive sense (i.e., meaning "having the potential to"), rather than the mandatory sense (i.e., meaning "must").

The words "include," "including," and "includes" and the words "comprises", "comprising", and "comprises" mean including and comprising, but not limited thereto, respectively. Additionally, as used herein, the term "coupled" may refer to two or more components connected together, whether that connection is permanent (e.g., welded, cast, moulded, carved) or temporary (e.g., bolted, screwed, adhered via an adhesive), direct or indirect (i.e., through an intermediary), mechanical, chemical, optical, or electrical as is the case in a communicatively coupled components which may be in communication with each other wirelessly or in a hardwired fashion.

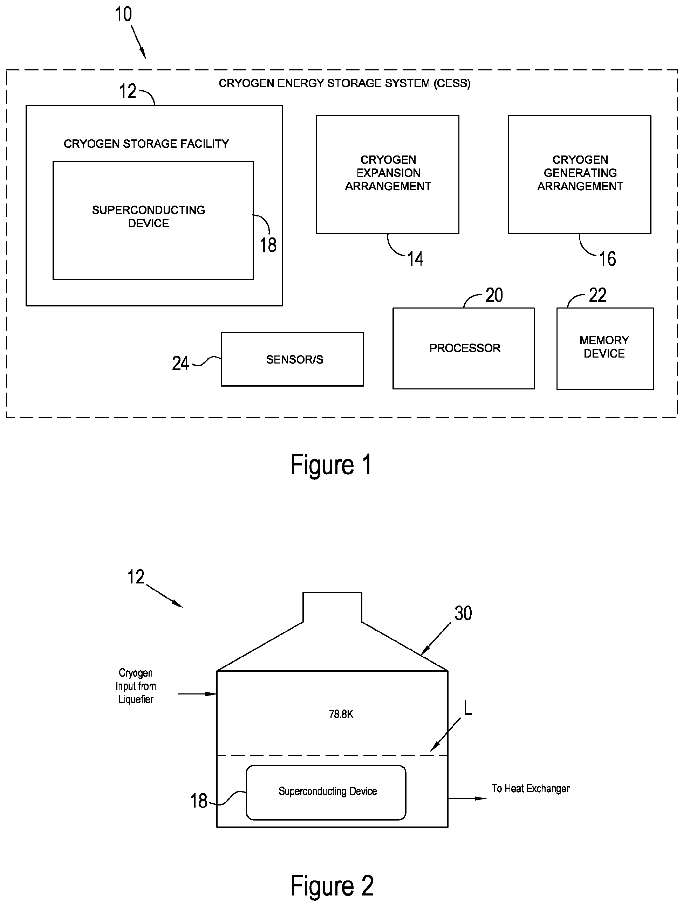

Referring to Figure 1 of the drawings, there is provided a cryogenic energy storage system (CESS) generally indicated by reference numeral 10. The CESS 10 is typically a hybrid CESS used to store energy which may be released therefrom in the form of electrical energy to power one or more loads operatively connected to the CESS 10. To this end, the CESS 10 may be used as a back-up electrical energy generator to supply electrical energy to the load/s in the event that other energy sources such as municipal electrical grids are not available/offline. Instead, or in addition, the CESS 10 is configured to supply cheaper or greener electrical energy to a load with/without being connected to a municipal electrical grid. To this end, the CESS 10 may comprise various power electronic component/s, device/s and apparatus/es (not shown) to enable the same to be interfaced with said load/s and/or the electrical grid.

In a preferred example embodiment, the CESS 10, or parts thereof is located adjacent a source of waste heat from a manufacturing/industrial process such as a factory, or the like, which generates heat which is otherwise lost.

The CESS 10 comprises a cryogen storage facility 12 storing or configured for storing a cryogen, for example, liquid air which is comprised primarily of nitrogen. Though other cryogenic material/s may be used as the stored cryogen, reference will be made to an example embodiment whereby the cryogen is liquid air though the terms "cryogen" and "liquid air" may be used interchangeably herein. Though not shown, the CESS 10 may comprise or may be in communication with a suitable air liquification system which may be employed to liquify air to be stored in the storage facility 12.

The CESS 10 also comprises a cryogen expansion arrangement 14 having a suitable heat exchanger (not shown) to expand the stored cryogen, and an energy generating/generation arrangement 16 configured to be powered by expanding cryogen from the cryogen expansion arrangement 14 to generate electrical energy, in use. Though not illustrated, the energy generating arrangement 16 may comprise a suitable turbine and a suitable generator, wherein the turbine is configured to be driven by expanding cryogen from the expansion arrangement 14, wherein the turbine drives the generator to generate electrical energy in a conventional fashion.

The CESS 10 and particularly at least the cryogen expansion arrangement 14 may be located near a source of waste heat as described herein.

The CESS 10 further comprises a superconducting device 18 located in the cryogen storage facility such that the superconducting device 18 is cooled by the cryogen stored in the cryogen storage facility 12. In this way, the need for a dedicated an expensive cooling system associated with the superconducting device 18 is obviated.

The superconducting device 18 may be a device comprising or manufactured from superconducting material/s. In this regard, the superconducting device may be selected from a group comprising a superconducting magnet energy storage (SMES) device, superconducting electronics, a superconducting transformer (ST), and a superconducting fault current limiter (SFCL).

For ease of explanation, reference will be made to the superconducting device 18 being in the form of a SMES device 18. However, it will be appreciated by those skilled in the art that the principles taught herein may apply *mutatis mutandis* to other superconducting devices and/or components.

The SMES device 18 is typically configured to store and output electrical energy, on demand, instead of, or in addition to, the electrical energy generated by the energy generating arrangement. Compared to the CESS the SMES device 18 is typically a high power, low energy device and thus the SMES device 18 is configured to provide power to a load operatively connected to the CESS 10 prior to the energy generating arrangement 16 providing power to said load. In other words, the SMES device 18 is configured to deliver electrical energy to the load relatively quickly whilst the energy generating arrangement 16 starts up to deliver electrical energy to the load.

The SMES device 18 is typically stored in the cryogen storage facility 12. In particular, with reference to Figure 2 of the drawings as well, the SMES device 18 is conveniently located in a cryogen storage tank 30 of the cryogen storage facility. As alluded to herein, the SMES device 18 is conveniently cooled by the cryogen in the tank 30 to a temperature not exceeding 78.8 K so as to prevent boil off of the liquid air and/or support the cooling of the SMES device 18 to within the desired parameters. In some example embodiment, the CESS 10 may comprise a suitable vacuum pump (not shown) to further reduce the temperature of the cryogen in the cryogen storage tank 30 to a temperature just above freezing temperature thereof, typically above 58 K.

The tank 30 may be constructed, or a majority of the tank 30 may be constructed, from non-metallic material/s. Moreover, the tank 30 may be thermally insulated, for example, by way of a suitable thermal jacket and may be sealed save for the ports/valves contemplated herein. In one example embodiment, the tank may be a 2000 litre tank storing or configured for storing liquid air cryogen, wherein the tank has a predetermined minimum level L of cryogen to be stored therein to adequately cool the superconducting device 18.

The tank 30 may comprise suitable vents and/or the like as well as inlet ports and/or outlet ports (not shown) for the inlet and outlet of liquid air cryogen to and from the tank 30.

The CESS 10 conveniently comprises a sensor arrangement comprising one or more sensors 24 (Figure 1) disposed in and/or around the tank 30 same to measure and/or sense various parameters associated with the tank 30, particularly the cryogen stored therein. To this end, the CESS 10 as described herein comprises a suitable processor 20 communicatively coupled to a suitable memory device 22 as well as the sensor/s 24 to receive the measured and/or sensed parameters and/or information indicative of the same.

The processor 20 may typically be one or a combination of microcontrollers, processors, graphics processors, or field programmable gate arrays (FPGAs) operable to achieve the desired operation as described herein. The processor 20 may be operable under instructions stored in an internal memory or external memory device 22 to perform the operations described herein.

The processor 20 is typically configured to activate a suitable alarm protocol in response to determining that one or more measured parameters is unacceptable. In this regard, the CESS 10 comprises a suitable level sensor (not shown) communicatively coupled to the processor 20 to measure or monitor an amount of cryogen stored in the cryogen storage tank 30. In particular, the processor 20 is configured to activate a suitable alarm protocol in response to determining that the level of cryogen in the cryogen storage tank, measured by way of the level sensor, falls below the minimum operating level L of cryogen required for the superconducting device 18. In this way, the cryogen stored in the tank 30 may be used to generate electrical energy by way of the arrangements 14 and 16 but the tank 30 is never emptied of cryogen to a level wherein it would impact on the ability of the cryogen stored in the tank to sufficiently cool the superconducting device 18.

In some example embodiments, the CESS 10 comprises a suitable vibration sensor (not shown) communicatively coupled to the processor 20 to sense vibration of, or in, the cryogen storage tank 30. The processor 20 is configured to activate a suitable alarm protocol in response to determining that the vibration sensed, by way of the vibration sensor, is not acceptable. In this way, the integrity of the CESS 10 may be preserved.

In some example embodiments, the CESS 10 comprises a suitable pressure sensor communicatively coupled to the processor 20 to measure the pressure in the cryogen storage tank 30. The processor 20 is configured to activate a suitable alarm protocol in response to determining that the pressure in the cryogen storage tank, measured by way of the pressure sensor, is not acceptable.

The CESS 10 conveniently comprises a plurality of temperature sensors (not shown) communicatively coupled to the processor 20 to measure temperature of the cryogen stored in the cryogen storage tank. The temperature sensors may be disposed at various locations within the cryogen storage tank 30 to measure at least the homogeneity of the cryogen stored therein. It will be appreciated that the processor 20 is configured to activate a suitable alarm protocol in response to determining that the temperature of the cryogen in the cryogen storage tank, measured by way of the temperature sensor, falls outside of the predetermined temperature range or setpoint, for example, if the temperature goes beyond 78.8 K. In this regard, if the processor 20 determines that the temperature of the cryogen in the tank 30 is increasing beyond 78.8 K, the processor 20 is configured to operate the suitable vacuum pump as mentioned above to reduce vapour pressure in the cryogen storage tank 30, thereby reducing the temperature of the cryogen in the cryogen storage tank 30 to bring the temperature within the predetermined temperature range or within the setpoint of 78.8 K.

It will be noted that the alarm protocol includes one or more of disconnecting/purging energy to/from the superconducting device 18, and generating a suitable alarm signal to actuate a suitable alarm device such as a siren, etc.

In one example embodiment, the cryogen storage tank 30 comprises a suitable agitator, such as a stirrer, (not shown) controllable by the processor 20 so as to at least to maintain a homogenous temperature in the cryogen storage tank 30.

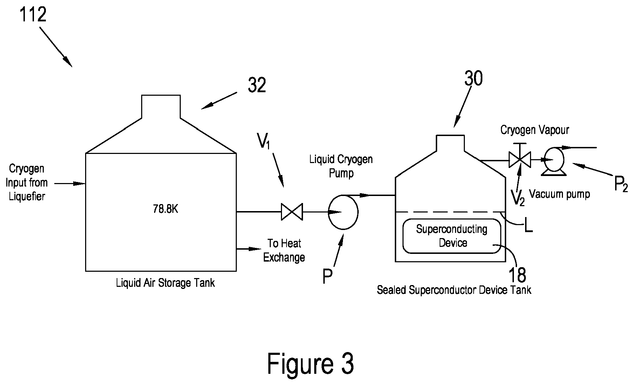

Referring now to Figure 3 of the drawings, where another example embodiment of the storage facility 112 in accordance with an example embodiment of the invention is illustrated. The storage facility 112 illustrated in Figure 3 comprises a cryogen storage tank 30 which is similar to the tank 30 described above with reference to Figure 2 and thus similar parts will be referred to by the same reference numerals. However, the storage facility 112 comprises a primary cryogen storage tank 32 storing or configured for storing the cryogen in selective fluid communication with the tank 30, the latter may be referred to herein as a secondary tank 30. It will be noted that the primary tank 32 may be similar to the tank 30 but does not house a superconducting device 18 therein and is primarily used to store cryogen primarily for purposes of operating the arrangements 14 and 16, and optionally top up cryogen in the tank 32. The tank 30 on the other hand is used to house the superconducting device 18 and/or optionally store cryogen for use by the arrangements 14 and 16, up to the predetermined level L. Though only one primary and one secondary tank 30, 32 is illustrated, it will be appreciated that the facility 112 may have a plurality of primary tanks 32 and optionally more than one secondary tank 30 storing or configured for storing a superconducting device 18 therein.

It will be noted that the CESS may comprise a suitable pump P and valve V1 disposed between the tanks 30 and 32 to control flow of cryogen from the primary tank 32 to the secondary tank 30, when required. In one example embodiment, the processor 20 is configured to operate the pump P and the valve V1 to transport cryogen from the tank 32 to the tank 30, for example, when the processor 20 determines, by way of the level sensor, for example, a capacitance level sensor, that the level of cryogen in the tank 30 is below the predetermined minimum level L.

As mentioned above, and as illustrated in Figure 3, the CESS 10 comprises a suitable vacuum pump Pv and a valve V2, wherein the processor 20 is configured to operate the vacuum pump Pv, and optionally operate the valve V2, to reduce the temperature of the cryogen in the tank 30 to be within the predetermined temperature range, for example, 58 K < T < 78K by reducing the vapour pressure within the tank 30.

In use, referring to Figures 1 to 3 of the drawings, the CESS 10 stores cryogen at a temperature below 78 K in the storage facility 12, 112, particularly the tanks 30, 32. In addition, the CESS 10 houses the superconducting device such as the SMES device 18 in one of the tanks 30.

When power is required by a load, the CESS 10 is operated such that the SMES 18 is actuated simultaneously with the release of cryogen to the expansion arrangement 14 and energy generating arrangement 16. However, due to the high power nature of the SMES device 18, the SMES device 18 provides power to the load before the energy generating arrangement 16 thus substantially decreasing any lag in supply of electrical energy to the load associated with the arrangement 16 in certain scenarios depending on load demands. In some example embodiments, it will be noted that the SMES device 18 may be operated to provide power to the load without the CESS 10 being operated to produce electrical energy through the release of cryogen to the expansion arrangement 14 and operation of the energy generating arrangement 16.

In the case of the facility 112, cryogen is typically utilised from the primary tank/s 32. However, should the need arise, or alternately in the case of the storage facility 12 comprising only the tank 30, cryogen is typically outlet from the tank 30 to the expansion arrangement 14 to power the energy generation arrangement 16. However, the processor 20 monitors the level of cryogen in the tank 30 by way of the level sensor. Should the processor 20 determine that the level of cryogen in the tank 30 is at or below the predetermined minimum level L, the processor 20 may be configured to operate the pump P and valve V1 to top up the cryogen in the tank 30.

Moreover, the processor 20 controls the stirrer in the tank 30 to ensure that the temperature distribution is homogenous. However, if the processor 20 determines, by way of the temperature sensor, that the temperature in the tank 30 is not homogenous and/or the stirrer is not working, the processor 20 activates a suitable alarm protocol to indicate that the stirrer is not operational. Similarly, alarm protocols may be activated by the processor 20 in response to determining via suitable sensors 24 that the pressure in the tank 30 or vibration sensed in/of the tank 30 is unacceptable.

In one example embodiment, if the processor 20 determines that the temperature of the cryogen in the tank 30 is above a set temperture value, Ts, which lies between the cryogen freezing point and cryogen boiling point (58 K<Ts<78 K)t, the processor 20 is configured to operate the vacuum pump Pv and optionally the valve V2 to reduce the vapour pressure in the tank 30 thus reducing the temperature of the cryogen in the tank 30. In the case of the facility 112, the vacuum pump Pv may be operated to bring the temperature of the cryogen therein between 58 K and 78 K.

Liquid air may be supplied to the storage facility 12, 112 by way of a suitable liquid air liquification system.

The resulting hybrid system as described herein seeks to reduces the capital and running cost of an independent cryogenic cooling system required for the superconducting devices/systems. Pumping on a cryogen storage facility (tank) by way of the vacuum pump reduces the vapour pressure and results in reducing the temperature of the cryogen; which results in the increase of performance of superconducting devices in the tanks which house the same.

A 100% green electrical supply is realised if a CESS is charged by renewable energy sources, such as Photovoltaic (PV) or wind turbines. In this regard, in some example embodiments, the CESS may be charged by a renewable energy source.

Voltage and power fluctuations in power systems can result from different events, for example, clouds passing over a PV farm can affect solar irradiance received by the PV farm. These fluctuation have a negative impact on loads connected directly to the PV, for example (i) causing changes in electrical machines torque, which leads to vibrations and deterioration of machine and (ii) uninterruptible power sources (UPS) where utilisation of the UPS batteries for short events impacts on the longevity of the batteries.

A CESS with energy stored as a cryogen intrinsically can accommodate the required operating temperatures of a SMES. This hybrid CESS/SMES system is well suited to mitigate power fluctuations such as mentioned above with a SMES power response, and for longer power outage durations with use of the CESS, for example when there is no electrical energy produced from PV farm (night-time).

## Claims

1. A cryogenic energy storage system (10) comprising:
a cryogen storage facility (112) comprising
(a) one or more primary cryogen storage tank/s (32); and
(b) at least one secondary cryogen storage tank (30)
storing or configured for storing a cryogen;
a cryogen expansion arrangement (14) configured to expand cryogen received from the cryogen storage facility (112), in use;
a suitable energy generating arrangement (16) configured to be powered by expanding cryogen from the cryogen expansion arrangement (14) to generate electrical energy, in use; **characterized in that** the cryogenic energy storage system further comprises
a superconducting device (18), located in the cryogen storage facility (112) such that the superconducting device (18) is cooled by the cryogen stored in the cryogen storage facility (112), in use; and
a suitable pump (P) and a suitable valve (V1) provided in a fluid flow path between the one or more primary cryogen storage tank/s (32) and the at least one secondary cryogen storage tank (30) to control flow of cryogen from the primary tank (32) to the secondary tank (30), when required; and
wherein the secondary cryogen storage tank (30) is a suitable thermally insulated cryogen storage tank and houses at least the superconducting device (18) therein.

2. A cryogenic energy storage system (10) as claimed in claim 1, wherein the superconducting device (18) is selected from a group comprising a superconducting magnet energy storage (SMES) device, superconducting electronics, a superconducting transformer (ST), and a superconducting fault current limiter (SFCL).

3. A cryogenic energy storage system (10) as claimed in any one of the preceding claims, wherein the cryogen storage facility (112) comprises a suitable temperature reducing assembly configured to reduce the temperature of the cryogen in the at least one secondary cryogen storage tank (30), optionally further comprising a vacuum pump configured to reduce vapor pressure in the secondary storage tank, wherein in use operation of the vacuum pump causes a reduction of the temperature of the cryogen in the secondary cryogen storage tank.

4. A cryogenic energy storage system (10) as claimed in claim 3, wherein the system (10) comprises:
a memory device (22);
a processor (20) coupled to the memory device (22);
one or more sensors (24) operatively arranged in the cryogen storage tank (30) operatively connected to the processor (20) to measure one or more parameters and transmit data indicative of the same to the processor (20), wherein the processor (20) is configured to activate a suitable alarm protocol in response to determining that one or more measured parameters is unacceptable; optionally
wherein the system (10) comprises a suitable level sensor communicatively coupled to the processor (20) to measure or monitor an amount of cryogen stored in the cryogen storage tank (30), wherein the processor (20) is configured to activate a suitable alarm protocol in response to determining that the amount of cryogen in the cryogen storage tank (30), measured by way of the level sensor, falls below a minimum operating amount of cryogen required for the superconducting device (18); and/or
wherein the system (10) comprises a suitable vibration sensor communicatively coupled to the processor (20) to sense vibration of, or in, the cryogen storage tank (30), wherein the processor (20) is configured to activate a suitable alarm protocol in response to determining that the vibration sensed, by way of the vibration sensor, is not acceptable; and/or
wherein the system (10) comprises a suitable pressure sensor communicatively coupled to the processor (20) to measure the pressure in the cryogen storage tank (30), wherein the processor (20) is configured to activate a suitable alarm protocol in response to determining that the pressure in the cryogen storage tank (30), measured by way of the pressure sensor, is not acceptable; and/or
wherein the system (10) comprises a temperature sensor communicatively coupled to the processor (20) to measure temperature of the cryogen stored in the cryogen storage tank (30), wherein the processor (20) is configured to activate a suitable alarm protocol in response to determining that the temperature of the cryogen in the cryogen storage tank (30), measured by way of the temperature sensor, falls outside of a predetermined temperature range or setpoint.

5. A cryogenic energy storage system (10) as claimed in either claim 3 or claim 4, wherein the cryogen storage tank (30) comprises a suitable agitator so as to at least to maintain a homogenous temperature in the cryogen storage tank (30).

6. A cryogenic energy storage system (10) as claimed in claim 5, wherein the pump (P) is operatively located in or adjacent to the primary cryogen storage tank (32) to pump cryogen from the primary cryogen storage tank (32) to the secondary cryogen storage tank (30) so as to maintain a predetermined level of cryogen in the secondary cryogen storage tank (30).

7. A cryogenic energy storage system (10) as claimed in claim 6, wherein the temperature of the cryogen in the primary cryogen storage tank (32) is at a temperature not greater than the boiling point of the cryogen, and wherein the temperature of the cryogen in the secondary cryogen storage tank (30) lies in a temperature range less than the boiling point of the cryogen and greater than the freezing point of the cryogen.

8. A cryogenic energy storage system (10) as claimed in any one of the preceding claims, wherein the cryogen expansion arrangement (14) comprises a suitable heat exchanger, optionally wherein the heat exchanger is configured to heat the cryogen using heat from one or more of ambient air, geothermal heat and, industrial waste heat from a power plant, and waste heat from a manufacturing plant.

9. A method of operating a cryogenic energy storage system (10),
wherein the method comprises:
(i) storing a cryogen in a cryogen storage facility (112); wherein the cryogen storage facility (112) comprises:
(a) one or more primary cryogen storage tank/s (32); and
(b) at least one secondary cryogen storage tank (30)
storing or configured for storing the cryogen;
(ii) expanding the stored cryogen received from the cryogen storage facility (112);
(iii) generating electrical energy by using the expanded cryogen to actuate a suitable energy generating arrangement (16);
(iv) providing a superconducting device (18), in the cryogen storage facility (112);
(v) cooling the superconducting device (18) with the cryogen stored in the cryogen storage facility (112); and
(vi) providing a suitable pump (P) and a suitable valve (V1) provided in a fluid flow path between the one or more primary cryogen storage tank/s (32) and the at least one secondary cryogen storage tank (30) to control flow of cryogen from the primary tank (32) to the secondary tank (30), when required,
wherein the secondary cryogen storage tank (30) is a suitable thermally insulated cryogen storage tank and houses at least the superconducting device (18) therein.

10. A method as claimed in claim 9, wherein the superconducting device (18) is selected from a group comprising a superconducting magnet energy storage (SMES) device, a superconducting transformer (ST), superconducting electronics, and a superconducting fault current limiter (SFCL).

11. A method as claimed in either claim 9 or claim 10, wherein the method comprises providing a suitable temperature reducing assembly configured to reduce the temperature of the cryogen in the at least one secondary cryogen storage tank (30), optionally further comprising a vacuum pump configured to reduce vapor pressure in the secondary storage tank, wherein in use operation of the vacuum pump causes a reduction of the temperature of the cryogen in the secondary cryogen storage tank.

12. A method as claimed in claim 11, wherein the method comprises:
measuring one or more parameters associated with the cryogen storage tank (30) and/or the cryogen stored therein;
transmitting the measured parameters to a suitable processor (20) communicatively coupled to a suitable memory device (22); and
activating a suitable alarm protocol in response to determining that one or more measured parameters is unacceptable.

13. A method as claimed in claim 12,
wherein the method comprises transporting cryogen from the primary cryogen storage tank (32) to the secondary cryogen storage tank (30) in response to detecting that a level of cryogen in the secondary cryogen storage tank (30) is below a predetermined threshold and/or transporting cryogen from the secondary cryogen tank (30) to the primary cryogen tank (32) up to a minimum volume of cryogen required in the secondary cryogen tank (30) required for the superconducting device (18).

## Patentansprüche

1. Kryogenes Energiespeichersystem (10), umfassend:
eine Kryogenspeichereinrichtung (112), umfassend
(a) einen oder mehrere primäre Kryogenspeichertanks (32); und
(b) mindestens einen sekundären Kryogenspeichertank (30), der Kryogen speichert oder zum Speichern von Kryogen konfiguriert ist;
eine Kryogenexpansionsanordnung (14), die dazu konfiguriert ist, Kryogen, das aus der Kryogenspeichereinrichtung (112) aufgenommen wurde, im Betrieb zu expandieren;
eine geeignete Energieerzeugungsanordnung (16), die dazu konfiguriert ist, im Betrieb durch expandierendes Kryogen aus der Kryogenexpansionsanordnung (14) angetrieben zu werden, um elektrische Energie zu erzeugen; **dadurch gekennzeichnet, dass** das kryogene Energiespeichersystem ferner umfasst:
eine supraleitende Vorrichtung (18), die sich in der Kryogenspeichereinrichtung (112) befindet, sodass die supraleitende Vorrichtung (18) durch das in der Kryogenspeichereinrichtung (112) gespeicherte Kryogen im Betrieb gekühlt wird; und
eine geeignete Pumpe (P) und ein geeignetes Ventil (V1), die in einem Fluidströmungsweg zwischen dem einen oder den mehreren primären Kryogenspeichertanks (32) und dem mindestens einen sekundären Kryogenspeichertank (30) vorgesehen sind, um den Fluss des Kryogens vom primären Tank (32) zu dem sekundären Tank (30) bei Bedarf zu steuern; und
wobei der sekundäre Kryogenspeichertank (30) ein geeigneter, wärmeisolierter Kryogenspeichertank ist und mindestens die supraleitende Vorrichtung (18) in sich beherbergt.

2. Kryogenes Energiespeichersystem (10) nach Anspruch 1, wobei die supraleitende Vorrichtung (18) aus einer Gruppe ausgewählt ist, die eine supraleitende Magnetenergiespeicher(SMES)-Vorrichtung, supraleitende Elektronik, einen supraleitenden Transformator (ST) und einen supraleitenden Fehlerstrombegrenzer (SFCL) umfasst.

3. Kryogenes Energiespeichersystem (10) nach einem der vorhergehenden Ansprüche, wobei die Kryogenspeichereinrichtung (112) eine geeignete Temperaturabsenkungsvorrichtung umfasst, die dazu konfiguriert ist, die Temperatur des Kryogens im mindestens einen sekundären Kryogenspeichertank (30) zu senken, und optional ferner eine Vakuumpumpe umfasst, die dazu konfiguriert ist, den Dampfdruck im sekundären Speichertank zu senken, wobei im Betrieb der Betrieb der Vakuumpumpe eine Absenkung der Temperatur des Kryogens im sekundären Kryogenspeichertank bewirkt.

4. Kryogenes Energiespeichersystem (10) nach Anspruch 3, wobei das System (10) umfasst:
eine Speichervorrichtung (22);
einen Prozessor (20), der mit der Speichervorrichtung (22) gekoppelt ist;
einen oder mehrere Sensoren (24), die betriebsbereit im Kryogenspeichertank (30) angeordnet sind und betriebsbereit mit dem Prozessor (20) verbunden sind, um einen oder mehrere Parameter zu messen und Daten, die auf diesen hinweisen, an den Prozessor (20) zu übertragen, wobei der Prozessor (20) dazu konfiguriert ist, ein geeignetes Alarmprotokoll als Reaktion auf das Bestimmen, dass ein oder mehrere gemessene Parameter nicht akzeptabel sind, zu aktivieren; optional
wobei das System (10) einen geeigneten Füllstandssensor umfasst, der mit dem Prozessor (20) kommunikationsmäßig gekoppelt ist, um die Menge des im Kryogenspeichertank (30) gespeicherten Kryogens zu messen oder zu überwachen, wobei der Prozessor (20) dazu konfiguriert ist, ein geeignetes Alarmprotokoll als Reaktion auf das Bestimmen, dass die Menge des im Kryogenspeichertank (30) durch den Füllstandssensor gemessenen Kryogens unter eine für die supraleitende Vorrichtung (18) erforderliche minimale Betriebsmenge fällt, zu aktivieren; und/oder
wobei das System (10) einen geeigneten Vibrationssensor umfasst, der mit dem Prozessor (20) kommunikationsmäßig gekoppelt ist, um Vibrationen des Kryogenspeichertanks (30) oder in diesem zu erfassen, wobei der Prozessor (20) dazu konfiguriert ist, ein geeignetes Alarmprotokoll als Reaktion auf das Bestimmen, dass die durch den Vibrationssensor erfasste Vibration nicht akzeptabel ist, zu aktivieren; und/oder
wobei das System (10) einen geeigneten Drucksensor umfasst, der mit dem Prozessor (20) kommunikationsmäßig gekoppelt ist, um den Druck im Kryogenspeichertank (30) zu messen, wobei der Prozessor (20) dazu konfiguriert ist, ein geeignetes Alarmprotokoll als Reaktion auf das Bestimmen, dass der durch den Drucksensor gemessene Druck im Kryogenspeichertank (30) nicht akzeptabel ist, zu aktivieren; und/oder
wobei das System (10) einen Temperatursensor umfasst, der mit dem Prozessor (20) kommunikationsmäßig gekoppelt ist, um die Temperatur des in dem Kryogenspeichertank (30) gespeicherten Kryogens zu messen, wobei der Prozessor (20) dazu konfiguriert ist, ein geeignetes Alarmprotokoll als Reaktion auf das Bestimmen, dass die von dem Temperatursensor gemessene Temperatur des Kryogens im Kryogenspeichertank (30) außerhalb eines vorbestimmten Temperaturbereichs oder Sollwerts liegt, zu aktiveren.

5. Kryogenes Energiespeichersystem (10) nach Anspruch 3 oder Anspruch 4, wobei der Kryogenspeichertank (30) einen geeigneten Rührer umfasst, um mindestens eine homogene Temperatur im Kryogenspeichertank (30) aufrechtzuerhalten.

6. Kryogenes Energiespeichersystem (10) nach Anspruch 5, wobei sich die Pumpe (P) betriebsbereit in oder neben dem primären Kryogenspeichertank (32) befindet, um Kryogen vom primären Kryogenspeichertank (32) zu dem sekundären Kryogenspeichertank (30) zu pumpen, um einen vorbestimmten Kryogenfüllstand im sekundären Kryogenspeichertank (30) aufrechtzuerhalten.

7. Kryogenes Energiespeichersystem (10) nach Anspruch 6, wobei die Temperatur des Kryogens im primären Kryogenspeichertank (32) eine Temperatur aufweist, die nicht höher als der Siedepunkt des Kryogens ist, und wobei die Temperatur des Kryogens im sekundären Kryogenspeichertank (30) in einem Temperaturbereich liegt, der unterhalb des Siedepunkts des Kryogens und oberhalb des Gefrierpunkts des Kryogens liegt.

8. Kryogenes Energiespeichersystem (10) nach einem der vorhergehenden Ansprüche, wobei die Kryogenexpansionsanordnung (14) einen geeigneten Wärmetauscher umfasst, wobei der Wärmetauscher optional dazu konfiguriert ist, das Kryogen unter Verwendung von Wärme von einem oder mehreren von Umgebungsluft, Erdwärme, industrielle Abwärme eines Kraftwerks und Abwärme einer Fertigungsanlage zu erwärmen.

9. Verfahren zum Betreiben eines kryogenen Energiespeichersystems (10),
wobei das Verfahren Folgendes umfasst:
(i) Speichern eines Kryogens in einer Kryogenspeichereinrichtung (112); wobei die Kryogenspeichereinrichtung (112) umfasst:
(a) einen oder mehrere primäre Kryogenspeichertanks (32); und
(b) mindestens einen sekundären Kryogenspeichertank (30), der Kryogen speichert oder zum Speichern von Kryogen konfiguriert ist;
(ii) Expandieren des gespeicherten Kryogens, das von der Kryogenspeichereinrichtung (112) aufgenommen wurde;
(iii) Erzeugen von elektrischer Energie, indem das expandierte Kryogen verwendet wird, um eine geeignete Energieerzeugungsanordnung (16) zu betätigen;
(iv) Bereitstellen einer supraleitenden Vorrichtung (18) in der Kryogenspeichereinrichtung (112);
(v) Kühlen der supraleitenden Vorrichtung (18) mit dem in der Kryogenspeichereinrichtung (112) gespeicherten Kryogen; und
(vi) Bereitstellen einer geeigneten Pumpe (P) und eines geeigneten Ventils (V1), die in einem Fluidströmungsweg zwischen dem einen oder den mehreren primären Kryogenspeichertanks (32) und dem mindestens einen sekundären Kryogenspeichertank (30) vorgesehen sind, um den Fluss des Kryogens vom primären Tank (32) zu dem sekundären Tank (30) bei Bedarf zu steuern,
wobei der sekundäre Kryogenspeichertank (30) ein geeigneter, wärmeisolierter Kryogenspeichertank ist und mindestens die supraleitende Vorrichtung (18) in sich beherbergt.

10. Verfahren nach Anspruch 9, wobei die supraleitende Vorrichtung (18) aus einer Gruppe ausgewählt ist, die eine supraleitende Magnetenergiespeicher(SMES)-Vorrichtung, einen supraleitenden Transformator (ST), supraleitende Elektronik und einen supraleitenden Fehlerstrombegrenzer (SFCL) umfasst.

11. Verfahren nach Anspruch 9 oder Anspruch 10, wobei das Verfahren das Bereitstellen einer geeigneten Temperaturabsenkungsvorrichtung umfasst, die dazu konfiguriert ist, die Temperatur des Kryogens im mindestens einen sekundären Kryogenspeichertank (30) zu senken, optional ferner umfassend eine Vakuumpumpe, die dazu konfiguriert ist, den Dampfdruck im sekundären Speichertank zu senken, wobei im Betrieb der Betrieb der Vakuumpumpe eine Absenkung der Temperatur des Kryogens im sekundären Kryogenspeichertank bewirkt.

12. Verfahren nach Anspruch 11, wobei das Verfahren umfasst:
Messen eines oder mehrerer Parameter, die dem Kryogenspeichertank (30) und/oder dem darin gespeicherten Kryogen zugeordnet sind;
Übertragen der gemessenen Parameter an einen geeigneten Prozessor (20), der kommunikationsmäßig mit einer geeigneten Speichervorrichtung (22) gekoppelt ist; und
Aktivieren eines geeigneten Alarmprotokolls als Reaktion auf das Bestimmen, dass ein oder mehrere gemessene Parameter nicht akzeptabel sind.

13. Verfahren nach Anspruch 12,
wobei das Verfahren das Fördern von Kryogen aus dem primären Kryogenspeichertank (32) in den sekundären Kryogenspeichertank (30) als Reaktion auf das Detektieren, dass der Kryogenfüllstand im sekundären Kryogenspeichertank (30) unter einem vorbestimmten Schwellenwert liegt, und/oder das Fördern von Kryogen aus dem sekundären Kryogentank (30) in den primären Kryogentank (32) bis zu einem Mindestvolumen an Kryogen, das im sekundären Kryogentank (30) für die supraleitende Vorrichtung (18) erforderlich ist, umfasst.

## Revendications

1. Système de stockage d'énergie cryogénique (10) comprenant :
une installation de stockage de cryogène (112) comprenant
(a) un ou plusieurs réservoirs de stockage de cryogène primaires (32) ; et
(b) au moins un réservoir de stockage de cryogène secondaire (30) stockant ou configuré pour stocker un cryogène ;
un dispositif de détente de cryogène (14) configuré pour provoquer la détente du cryogène reçu de l'installation de stockage de cryogène (112), lors de l'utilisation ;
un agencement de génération d'énergie (16) approprié configuré pour être alimenté par détente du cryogène provenant de l'agencement de détente de cryogène (14) pour générer de l'énergie électrique, lors de l'utilisation ;
**caractérisé en ce que** le système de stockage d'énergie cryogénique comprend en outre
un dispositif supraconducteur (18), situé dans l'installation de stockage de cryogène (112) de sorte que le dispositif supraconducteur (18) soit refroidi par le cryogène stocké dans l'installation de stockage de cryogène (112), lors de l'utilisation ; et
une pompe (P) appropriée et une vanne (V1) appropriée prévues dans un trajet d'écoulement de fluide entre le ou les réservoirs de stockage de cryogène (32) et l'au moins un réservoir de stockage de cryogène secondaire (30) pour réguler l'écoulement de cryogène du réservoir primaire (32) vers le réservoir secondaire (30), lorsque cela est nécessaire ; et
dans lequel le réservoir de stockage de cryogène secondaire (30) est un réservoir de stockage de cryogène thermiquement isolé approprié et loge au moins le dispositif supraconducteur (18) à l'intérieur de celui-ci.

2. Système de stockage d'énergie cryogénique (10) selon la revendication 1, dans lequel le dispositif supraconducteur (18) est choisi dans un groupe comprenant un dispositif de stockage d'énergie magnétique supraconducteur (SMES), une électronique supraconductrice, un transformateur supraconducteur (ST) et un limiteur de courant de défaut supraconducteur (SFCL).

3. Système de stockage d'énergie cryogénique (10) selon l'une quelconque des revendications précédentes, dans lequel l'installation de stockage de cryogène (112) comprend un ensemble réducteur de température approprié configuré pour réduire la température du cryogène dans l'au moins un réservoir de stockage de cryogène secondaire (30), comprenant facultativement en outre une pompe à vide configurée pour réduire la pression de vapeur dans le réservoir de stockage secondaire, dans lequel, lors de l'utilisation, le fonctionnement de la pompe à vide entraîne une réduction de la température du cryogène dans le réservoir de stockage de cryogène secondaire.

4. Système de stockage d'énergie cryogénique (10) selon la revendication 3, dans lequel le système (10) comprend :
un dispositif de mémoire (22) ;
un processeur (20) couplé au dispositif mémoire (22) ;
un ou plusieurs capteurs (24) agencés fonctionnellement dans le réservoir de stockage de cryogène (30) reliés fonctionnellement au processeur (20) pour mesurer un ou plusieurs paramètres et transmettre des données indicatives de ceux-ci au processeur (20), dans lequel le processeur (20) est configuré pour activer un protocole d'alarme approprié en réponse à la détermination qu'un ou plusieurs paramètres mesurés sont inacceptables ; facultativement
dans lequel le système (10) comprend un capteur de niveau approprié couplé de manière communicative au processeur (20) pour mesurer ou surveiller une quantité de cryogène stockée dans le réservoir de stockage de cryogène (30), dans lequel le processeur (20) est configuré pour activer un protocole d'alarme approprié en réponse à la détermination que la quantité de cryogène dans le réservoir de stockage de cryogène (30), mesurée au moyen du capteur de niveau, tombe en dessous d'une quantité de fonctionnement minimale de cryogène requise pour le dispositif supraconducteur (18) ; et/ou
dans lequel le système (10) comprend un capteur de vibrations approprié couplé de manière communicative au processeur (20) pour détecter des vibrations de, ou dans, le réservoir de stockage de cryogène (30), dans lequel le processeur (20) est configuré pour activer un protocole d'alarme approprié en réponse à la détermination que les vibrations détectées, au moyen du capteur de vibrations, ne sont pas acceptables ; et/ou
dans lequel le système (10) comprend un capteur de pression approprié couplé de manière communicative au processeur (20) pour mesurer la pression dans le réservoir de stockage de cryogène (30), dans lequel le processeur (20) est configuré pour activer un protocole d'alarme approprié en réponse à la détermination que la pression dans le réservoir de stockage de cryogène (30), mesurée au moyen du capteur de pression, n'est pas acceptable ; et/ou
dans lequel le système (10) comprend un capteur de température couplé de manière communicative au processeur (20) pour mesurer la température du cryogène stocké dans le réservoir de stockage de cryogène (30), dans lequel le processeur (20) est configuré pour activer un protocole d'alarme approprié en réponse à la détermination que la température du cryogène dans le réservoir de stockage de cryogène (30), mesurée au moyen du capteur de température, tombe en dehors d'une plage de température ou d'un point de consigne prédéterminé.

5. Système de stockage d'énergie cryogénique (10) selon la revendication 3 ou la revendication 4, dans lequel le réservoir de stockage de cryogène (30) comprend un agitateur approprié de manière à au moins maintenir une température homogène dans le réservoir de stockage de cryogène (30).

6. Système de stockage d'énergie cryogénique (10) selon la revendication 5, dans lequel la pompe (P) est positionnée fonctionnellement dans le réservoir de stockage de cryogène primaire (32) ou adjacente à celui-ci pour pomper du cryogène du réservoir de stockage de cryogène primaire (32) vers le réservoir de stockage de cryogène secondaire (30) de manière à maintenir un niveau prédéterminé de cryogène dans le réservoir de stockage de cryogène secondaire (30).

7. Système de stockage d'énergie cryogénique (10) selon la revendication 6, dans lequel la température du cryogène dans le réservoir de stockage de cryogène primaire (32) est à une température non supérieure au point d'ébullition du cryogène, et dans lequel la température du cryogène dans le réservoir de stockage de cryogène secondaire (30) se situe dans une plage de température inférieure au point d'ébullition du cryogène et supérieure au point de congélation du cryogène.

8. Système de stockage d'énergie cryogénique (10) selon l'une quelconque des revendications précédentes, dans lequel l'agencement de détente de cryogène (14) comprend un échangeur de chaleur approprié, facultativement dans lequel l'échangeur de chaleur est configuré pour chauffer le cryogène en utilisant de la chaleur provenant d'un ou plusieurs parmi l'air ambiant, la chaleur géothermique et la chaleur résiduelle industrielle d'une centrale électrique, et la chaleur résiduelle d'une usine de fabrication.

9. Procédé de fonctionnement d'un système de stockage d'énergie cryogénique (10),
dans lequel le procédé comprend :
(i) le stockage d'un cryogène dans une installation de stockage de cryogène (112) ; dans lequel l'installation de stockage de cryogène (112) comprend :
(a) un ou plusieurs réservoirs de stockage de cryogène primaires (32) ; et
(b) au moins un réservoir de stockage de cryogène secondaire (30) stockant ou configuré pour stocker le cryogène ;
(ii) la détente du cryogène stocké reçu de l'installation de stockage de cryogène (112) ;
(iii) la génération d'énergie électrique en utilisant le cryogène détendu pour actionner un dispositif de génération d'énergie (16) approprié ;
(iv) la fourniture d'un dispositif supraconducteur (18), dans l'installation de stockage de cryogène (112) ;
(v) le refroidissement du dispositif supraconducteur (18) avec le cryogène stocké dans l'installation de stockage de cryogène (112) ; et
(vi) la fourniture d'une pompe (P) appropriée et d'une vanne (V1) appropriée prévues dans un trajet d'écoulement de fluide entre le ou les réservoirs de stockage de cryogène (32) et l'au moins un réservoir de stockage de cryogène secondaire (30) pour réguler l'écoulement de cryogène du réservoir primaire (32) vers le réservoir secondaire (30), lorsque cela est nécessaire,
dans lequel le réservoir de stockage de cryogène secondaire (30) est un réservoir de stockage de cryogène thermiquement isolé approprié et loge au moins le dispositif supraconducteur (18) à l'intérieur de celui-ci.

10. Procédé selon la revendication 9, dans lequel le dispositif supraconducteur (18) est choisi dans un groupe comprenant un dispositif de stockage d'énergie magnétique supraconducteur (SMES), un transformateur supraconducteur (ST), une électronique supraconductrice et un limiteur de courant de défaut supraconducteur (SFCL).

11. Procédé selon la revendication 9 ou la revendication 10, dans lequel le procédé comprend la fourniture d'un ensemble réducteur de température approprié configuré pour réduire la température du cryogène dans l'au moins un réservoir de stockage de cryogène secondaire (30), comprenant facultativement en outre une pompe à vide configurée pour réduire la pression de vapeur dans le réservoir de stockage secondaire, dans lequel, lors de l'utilisation, le fonctionnement de la pompe à vide entraîne une réduction de la température du cryogène dans le réservoir de stockage de cryogène secondaire.

12. Procédé selon la revendication 11, dans lequel le procédé comprend :
la mesure d'un ou plusieurs paramètres associés au réservoir de stockage de cryogène (30) et/ou au cryogène stocké dans celui-ci ;
la transmission des paramètres mesurés à un processeur (20) approprié couplé de manière communicative à un dispositif de mémoire (22) approprié ; et
l'activation d'un protocole d'alarme approprié en réponse à la détermination qu'un ou plusieurs paramètres mesurés sont inacceptables.

13. Procédé selon la revendication 12,
dans lequel le procédé comprend le transport de cryogène du réservoir de stockage de cryogène primaire (32) vers le réservoir de stockage de cryogène secondaire (30) en réponse à la détection qu'un niveau de cryogène dans le réservoir de stockage de cryogène secondaire (30) est inférieur à un seuil prédéterminé et/ou le transport de cryogène du réservoir de cryogène secondaire (30) vers le réservoir de cryogène primaire (32) jusqu'à un volume minimal de cryogène requis dans le réservoir de cryogène secondaire (30) requis pour le dispositif supraconducteur (18) .
